# EUROPÄISCHE PATENTSCHRIFT

(11) **EP 2 501 521 B1**
(45) Veröffentlichungstag und Bekanntmachung des Hinweises auf die Patenterteilung: **05.03.2014**
(21) Anmeldenummer: 10776614.9
(22) Anmeldetag: 21.10.2010
(51) Int. Cl.: B24B 57/00, B28D 5/00

(54) **VERFAHREN ZUM ABTRENNEN VON SCHLEIFÖL AUS SCHLEIFSCHLÄMMEN; TRENNSTATION ZUR DURCHFÜHRUNG DES VERFAHRENS UND VERFAHRENSTECHNISCHE ANLAGE**
METHOD FOR SEPARATING GRINDING OIL FROM GRINDING SLURRY; SEPARATING STATION FOR CARRYING OUT SAID METHOD AND PLANT ACCORDING TO SAID METHOD
PROCÉDÉ POUR SÉPARER DE L'HUILE DE MEULAGE DE POUSSIÈRES DE MEULAGE; STATION DE SÉPARATION POUR LA MISE EN UVRE DU PROCÉDÉ ET INSTALLATION TECHNOLOGIQUE

(30) Priorität: 20.11.2009 DE 102009054076
(43) Veröffentlichungstag der Anmeldung: 26.09.2012
(73) Patentinhaber: Erwin Junker Maschinenfabrik GmbH, 77787 Nordrach (DE)
(72) Erfinder: JUNKER, Erwin, 77815 Bühl (DE)
(74) Vertreter: Leske, Thomas
(86) Internationale Anmeldenummer: PCT/EP2010/065887
(87) Internationale Veröffentlichungsnummer: WO 2011/061039

(56) Entgegenhaltungen:
- EP-A2- 0 515 011
- WO-A1-2008/013327
- WO-A2-03/068405
- DE-A1- 19 600 505

## Beschreibung

Die Erfindung betrifft ein Verfahren zum Abtrennen von Schleiföl aus Schleifschlämmen nach dem Oberbegriff des Anspruchs 1, Trennstationen zur Durchführung des Verfahrens nach den Oberbegriffen der Ansprüche 14, 15 und 22, sowie eine verfahrenstechnische Anlage nach dem Oberbegriff des Anspruchs 24. Ein Verfahren und eine Trennstation dieser Art sind aus der DE 196 00 505 A1 bekannt.

Das bekannte Verfahren ist bereits darauf ausgerichtet, die Voraussetzungen für eine Entsorgung oder einen Wiedereinsatz der einzelnen Schleifschlamm-Komponenten zu schaffen. Indem der Gehalt des Schleifschlamms an Schleiföl genügend weit herabgesetzt wird, kann der Metallanteil in einem Stahlwerk oder in einer Gießerei wiederverwertet werden, oder das Schleiföl kann mit einem solchen Reinheitsgrad abgetrennt werden, dass es aufbereitet und wiederverwendet werden kann. Mit dem bekannten Verfahren wurde das Ziel verfolgt, mit geringem Aufwand an Vorrichtungen und Verfahrensführung die Kosten des Trenn- oder Reinigungsverfahrens zu verringern. Hierzu wird nach dem Vorschlag der DE 196 00 505 A1ein Verfahren der mechanischen Trennung mit einem thermischen Verfahren vereinigt. Im Einzelnen wird gemäß der DE 196 00 505 A1 die mechanische Trennung in einer Zentrifuge vorgenommen und der Schleifschlamm gleichzeitig erwärmt, indem in der metallischen feinteiligen Phase durch magnetische Induktion elektrische Wirbelströme erzeugt werden. Das erforderliche Magnetfeld kann durch Permanent- oder Elektromagnete erzeugt werden, die stationär in der rotierenden Trommel der Zentrifuge angeordnet sind.

Das bekannte Verfahren hat den Nachteil, dass die sich aus dem Schleifschlamm lösenden Anteile des Schleiföls von unten nach oben in der Trommel aufsteigen und dabei zum Teil durch den Schlammkuchen hindurchtreten müssen, der sich an der Innenwand der Trommel absetzt und infolge der Schwerkraft nach unten immer dicker wird. Ferner muss bei einer derartigen Zentrifuge in regelmäßigen Abständen der Schlammkuchen von der Innenwand der Zentrifuge abgeschabt werden, was einen erheblichen Arbeitsaufwand bedeutet. Eine kontinuierliche Arbeitsweise dürfte mit dem bekannten Verfahren nur möglich sein, indem zwei Zentrifugen vorgesehen werden, die abwechselnd betrieben und gewartet werden.

Demgegenüber liegt der Erfindung die Aufgabe zugrunde, ein Verfahren der eingangs genannten Art zu schaffen, bei dem sowohl für das Einbringen der Wärme in den Schleifschlamm als auch für das Ausbringen derjenigen Schleiföl-Anteile, deren kinematische Viskosität genügend verringert ist, klare physikalische Verhältnisse vorliegen, sodass ein zuverlässiger Dauerbetrieb mit hoher Wirksamkeit und guter Auswertung der eingesetzten Energie möglich wird.

Diese Aufgabe wird erfindungsgemäß mit der Gesamtheit der Merkmale gemäß Anspruch 1 gelöst. Die vorteilhaften Wirkungen des erfindungsgemäßen Verfahrens kommen zunächst dadurch zustande, dass der Schleifschlamm auf einem Träger zu einer flachen Schicht von geringer Höhe ausgebreitet wird. Indem die freie Oberfläche der flachen Schleifschlamm-Schicht dem Wirkungsbereich einer von oben einwirkenden Induktorplatte ausgesetzt wird, liegen klare geometrische Verhältnisse für das Aufheizen der Schicht vor. Da das Beheizen von oben erfolgt, kann das in seiner Viskosität reduzierte Schleiföl den Schleifschlamm nach unten verlassen, weil in dem Träger geeignete Öffnungen vorgesehen werden. Der noch weiter aufzuheizende Schleifschlamm ist somit von den beweglich gewordenen Schleiföl-Anteilen sofort befreit und weiterer Erwärmung gut zugänglich. Das Entfernen des in seinem Schleiföl-Gehalt reduzierten Schleifschlamms erfolgt außerhalb des Wirkungsbereiches der Induktorplatte, wohingegen das Aufbringen der Schleifschlamm-Schicht auf den Träger entweder in oder außerhalb von deren Wirkungsbereich erfolgen kann. Infolge dieser Anordnung ist eine gute Ausnutzung der von der Induktorplatte erzeugten Wärme gewährleistet, die in den Metall-Anteilen des Schleifschlamms unmittelbar entsteht. Als ein anschaulicher Vergleich für das erfindungsgemäße Vorgehen kann das Ausbreiten und Erhitzen eines Pizzateigs dienen. Wenn der Schleifschlamm im Wirkungsbereich der Induktorplatte auf den Träger aufgebracht werden soll, kann dies beispielsweise von der Seite schräg nach unten auf den Träger in den Zwischenraum zwischen Induktorplatte und Träger erfolgen.

Besonders gute Erfahrungen sind mit einer Schleifschlamm-Schicht gewonnen worden, die auf dem Träger mit einer Dicke von 2 bis 30 mm vorliegt. Jedoch ist dieser Größenbereich nicht in jedem Fall zwingend; je nach Beschaffenheit des Schleifschlamms und der Höhe der kinematischen Viskosität des Schleiföls können auch mit größeren Schichtdicken vorteilhafte Ergebnisse erzielt werden.

Die induktive Beheizung des Schleifschlammes ist naturgemäß davon abhängig, wie stark die ferromagnetischen Eigenschaften der Metallspäne und/oder des Metallstaubs in dem Schleifschlamm ausgeprägt sind. Die Temperatursteigerung kann unterschiedlich stark erfolgen, indem die Induktionsheizung mit unterschiedlicher Intensität und Dauer eingeschaltet wird. Bei schwächeren ferromagnetischen Eigenschaften ist es zweckmäßig, auf die freie Oberfläche der flachen Schleifschlamm-Schicht eine Stahlplatte aufzulegen, die sich im Wirkungsbereich der Induktorplatte zwischen dieser und der freien Oberfläche der Schleifschlamm-Schicht befindet. In diesem Fall erhitzt die Induktorplatte vor allem die Stahlplatte, welche dann ihre Wärme an die darunter liegende Schleifschlamm-Schicht abgibt.

Insbesondere wenn der Schleifschlamm noch durch weitere Stoffe verunreinigt ist, kann es zudem zweckmäßig sein, in die flache Schleifschlamm-Schicht eine weitere Stahlplatte einzulegen, die sich dann im Abstand über dem Träger befindet, also inmitten der Schleifschlamm-Schicht angeordnet ist. Diese zusätzliche Platte kann als Lochplatte oder als Sieb ausgebildet sein und wird ebenfalls induktiv durch die Induktorplatte erhitzt. Durch diese inmitten der Schleifschlamm-Schicht befindliche Wärmequelle können die Nachteile von schwächeren ferromagnetischen Eigenschaften oder von einer Verschmutzung des Schleifschlammes ausgeglichen werden.

In einer ersten Ausgestaltung kann das erfindungsgemäße Verfahren derart ausgeführt werden, dass abgeteilte Teilmengen des Schleifschlammes auf einer Trägerschüssel ausgebreitet werden, die dann von unten in den Wirkungsbereich der Induktorplatte verbracht wird. Dies führt zu einer verhältnismäßig einfachen Anlage, die für nicht zu große Mengen der Schleifschlamm-Trennung in Frage kommt.

Eine andere Verfahrensweise besteht darin, den Träger als Endlosförderer auszubilden, auf dem mindestens drei Trägerschüsseln ausgebildet sind, welche nacheinander den Vorgängen des a) Ausbreitens, b) induktiven Heizens durch die Induktorplatte und c) des Entladens zugeführt werden. Die Bewegung des Endlosförderers erfolgt dabei taktweise, und die Induktorplatte wird für den Heizvorgang jeweils von oben auf die betreffende Trägerschüssel abgesenkt. Der Endlosförderer kann dabei als Gurtförderer mit linearer Förderrichtung oder auch als Kreisförderer ausgebildet sein. Weitere vorteilhafte Ausgestaltungen sind in Unteransprüchen zu den einzelnen Verfahren angegeben.

Darüber hinaus ist aber auch eine vollständig kontinuierliche Verfahrensweise möglich, indem das Verfahren mit einem kontinuierlich bewegten Gurtförderer durchgeführt wird, dessen oberes Trum als Träger für eine kontinuierlich abgelegte Schleifschlamm-Schicht dient und diese unter einer ständig aktivierten Induktorplatte hindurchführt. Hierbei steuert die Laufgeschwindigkeit des oberen Trums die Wärmeeinbringung in die Schleifschlamm-Schicht, wobei die Beeinflussungsmöglichkeiten der Induktorplatte noch hinzukommen.

Die hier aufgezeigten Verfahren gemäß der Erfindung lassen sich gut mit Vorbehandlungsstufen kombinieren, die in einem mechanischen Abscheiden des Schleiföls aus dem Schleifschlamm und einer sich an diese anschließenden Vorwärmung des Schleifschlammes bestehen können. Auf diese Weise wird erreicht, dass die elektrische Energie der Induktorplatte auf besonders wirtschaftliche Weise erst in der letzten Behandlungsstufe eingebracht und ausgenutzt wird.

Mit dem hier aufgezeigten erfindungsgemäßen Verfahren ist es möglich, erheblich mehr Schleiföl aus dem Schleifschlamm abzuscheiden und einer Wiederverwendung zuzuführen. Vor allem das Schleiföl stellt bei der schleifenden Bearbeitung einen nicht unerheblichen Kostenfaktor dar. Je höher der Anteil des Schleiföls ist, welcher wiedergewonnen werden kann, umso wirtschaftlicher ist das gesamte Schleifverfahren. Mit dem vorbeschriebenen erfindungsgemäßen Verfahren ist es nun möglich, soviel Schleiföl aus dem Schleifschlamm abzuscheiden, dass nur noch geringe Restmengen im Schleifschlamm verbleiben. Aber selbst diese geringen Restmengen können dazu führen, dass der Schleifschlamm als Sondermüll angesehen wird und nicht ohne Weiteres einer Wiederverwendung beispielsweise durch Aufschmelzen des abgeschliffenen Metalls zugänglich ist. Gemäß einer weiteren Ausgestaltung der Erfindung ist es daher vorgesehen, dass nach dem Abtrennen von Schleiföl durch Verringerung von dessen Viskosität in einem nachgelagerten Verfahrensschritt die Restmenge an Schleiföl verbrannt wird. Dies kann beispielsweise dadurch erreicht werden, dass die Einrichtung zur induktiven Erwärmung des Schleiföls so geregelt wird, dass dessen Temperatur in den Bereich der Verbrennungstemperatur angehoben und es verbrannt wird. Es ist jedoch auch möglich, dass eine zusätzliche Energiequelle vorgesehen wird, mittels welcher das restliche Schleiföl verbrannt wird. Eine derartige zusätzliche Energiequelle kann beispielsweise auch ein Brenner sein.

Die Erfindung betrifft auch Trennstationen, mit denen das erfindungsgemäße Verfahren in seinen einzelnen Ausprägungen durchgeführt werden kann. Die einzelnen Trennstationen sind in den Ansprüchen 14, 15 und 22 aufgeführt; Weiterbildungen hierzu sind in den rückbezogenen Ansprüchen 16-21 bzw. 23 angegeben. Hierbei ist besonders hervorzuheben, dass auch der Boden der Trägerschüssel, der als flache Platte ausgebildet ist, im Bedarfsfalle aus einem ferromagnetischen Werkstoff bestehen kann. Das gilt wieder für den Fall, dass die ferromagnetischen Eigenschaften des Metallanteils im Schleifschlamm unzureichend sind oder dass der Schleifschlamm verunreinigt ist. In diesem Fall wirkt die Induktorplatte bis auf den Boden der Trägerschüssel und erzeugt von dort aus eine Wärmeeinwirkung. Diese beruht wieder darauf, dass die Schichtdicke des in den Trägerschüsseln ausgebreiteten Schleifschlamms verhältnismäßig dünn ist.

Schließlich betrifft die Erfindung auch eine verfahrenstechnische Anlage nach Anspruch 24, in der aus Schleifschlämmen Schleiföl abgetrennt wird, indem eine mechanisch wirkende Trennvorrichtung mit einer induktiven Beheizung kombiniert wird. Das Besondere dieser Anlage besteht darin, dass die einzelnen Verfahrenweisen getrennt sind und in unterschiedlichen Behandlungsstationen durchgeführt werden. Nach einer mechanisch wirkenden Trennvorrichtung und einer Vorwärmung kann als dritte und vorzugsweise letzte Behandlung das induktive Trennen mit einer Trennstation gemäß der Erfindung erfolgen. Diese kann daher besonders gut optimiert werden. Vorzugsweise ist eine vierte Behandlungsstation vorgesehen, welche eine Trennstation mit zusätzlicher Energiequelle oder mit einer regelbaren induktiven Einrichtung zur Verbrennung von Restmengen von Schleiföl vorgesehen ist.

Die Erfindung wird anschließend anhand von Ausführungsbeispielen, die in Zeichnungen dargestellt sind, noch näher erläutert. Die Figuren zeigen das Folgende:
- Fig. 1: erläutert in einem Längsschnitt das Prinzip einer Trennstation gemäß der Erfindung in einer ersten Ausführungsform.
- Fig. 2: zeigt eine zusätzliche Einzelheit zu der Trennstation gemäß Fig. 1.
- Fig. 3: ist die Darstellung einer mehrstufigen verfahrenstechnischen Anlage, in der eine Trennstation gemäß Fig. 1 die Endstufe bildet.
- Fig. 4: erläutert eine zweite Ausführungsform einer erfindungsgemäßen Trennstation.
- Fig. 5: ist die Darstellung einer Trennstation gemäß Fig. 4, bei der eine weitere Behandlungseinheit hinzugefügt ist.
- Fig. 6: zeigt das Prinzip einer dritten Ausführungsform in einer Ansicht von oben auf die Trennstation.
- Fig. 7: ist die zu Fig. 6 gehörende teilweise geschnittene Seitenansicht.
- Fig. 8: erläutert das Prinzip einer vierten Ausführungsform.

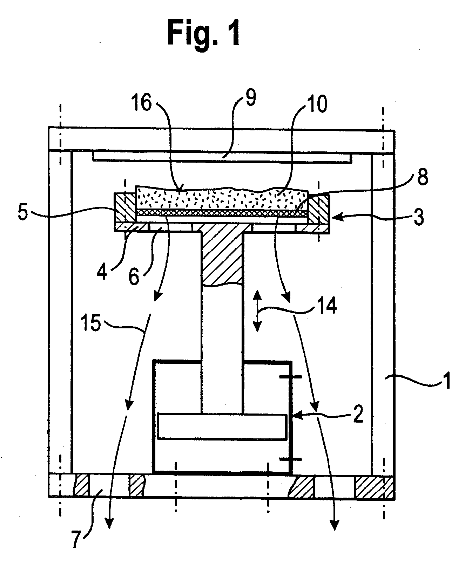

In Fig. 1 ist eine Trennstation gemäß einer ersten Ausführungsform dargestellt. Dabei ist in einem Gestell 1 eine Hubvorrichtung 2 angeordnet, die in Form eines Verstellkolbens mit einer massiven, als Tragesäule geeigneten Kolbenstange angedeutet ist. Die Hubvorrichtung dient dazu, eine Trägerschüssel 3 aufwärts und abwärts zu bewegen, vgl. den Richtungspfeil 14 für die Hubbewegung. Die Trägerschüssel besteht aus einer flachen Platte 4 mit einem nach oben ragenden, die flache Platte 4 umgebenden Rand 5 und hat Kreisquerschnitt. Die flache Platte 14 ist mit Öffnungen 6 versehen, durch die abgetrenntes Schleiföl abfließen kann, vgl. den Richtungspfeil15 für die Abflussrichtung. Auch der Boden des Gestells 1 ist zu demselben Zweck mit Öffnungen 7 versehen.

Im Abstand über der flachen Platte 4 der Trägerschüssel 3 ist ein durchlässiger Zwischenboden 8 angeordnet. Er kann als Siebboden oder in der Form einer gelochten Platte ausgebildet sein. Die Durchflussöffnungen des Zwischenbodens 8 sind klein im Verhältnis zu den Öffnungen 6 in der flachen Platte 4. Der durchlässige Zwischenboden 8 ermöglicht das ungehinderte Abfließen oder -tropfen von Schleiföl-Anteilen mit verringerter Viskosität aus der Schleifschlamm-Schicht 10. Die Maschenweite des Siebes oder der Lochdurchmesser einer Lochplatte richtet sich nach der Beschaffenheit des Schleifschlamms und der kinematischen Viskosität des Schleiföls.

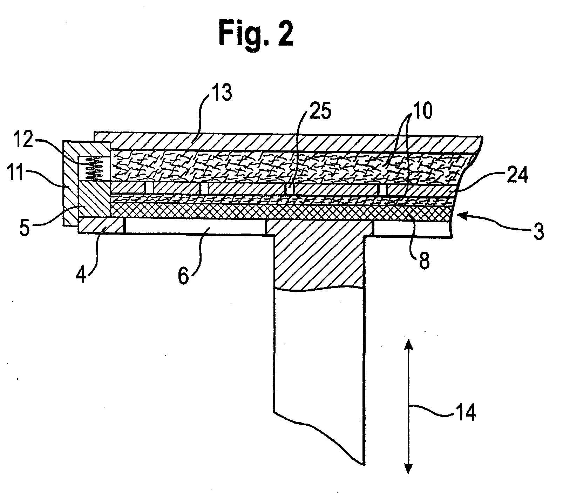

Fig. 2 zeigt weitere Einzelheiten, mit denen die Funktion der Trägerschüssel 3 verbessert werden kann. Auf die Trägerschüssel 3 kann ein Anlagerahmen 11 aufgelegt sein, der den Rand 5 der Trägerschüssel 3 gleitfähig umgibt und elastisch nachgiebig an der Trägerschüssel 3 abgestützt ist. Die elastische Nachgiebigkeit kann durch eine Reihe von Schraubenfedern 13 bewirkt werden, die sich zwischen dem Rand 5 der Trägerschüssel 3 und dem Anlagerahmen 11 befinden. Der Anlagerahmen 11 hat hierzu ein nach innen abgewinkeltes Profil.

Der Anlagerahmen 11 ist zum Zusammenwirken mit einer Induktorplatte 9 bestimmt, die sich oberhalb der Trägerschüssel 3 befindet und mit ihrer Fläche die Fläche der Trägerschüssel 3 überdeckt. Trägerschüssel 3 und Induktorplatte 9 sind parallel zueinander verlaufend angeordnet. Im Betrieb der Trennstation befindet sich auf der Trägerschüssel 3 eine Schleifschlamm-Schicht 10, die Schleiföl enthält. Die Trägerschüssel 3 wird mittels der Hubvorrichtung 3 dicht an die Induktorplatte 9 herangefahren, bis die Schleifschlamm-Schicht 10 sich im Wirkungsbereich der Induktorplatte 9 befindet. Dabei muss jedoch die freie Oberfläche 16 der Schleifschlamm-Schicht 10 die Induktorplatte 9 nicht berühren, da eine Induktionserwärmung auch schon ohne direkte Berührung entsteht. Der gleitfähige Anlagerahmen 11 bewirkt beim Heranfahren der Trägerschüssel 3 an die Induktorplatte 9, dass die auf der Trägerplatte 3 befindliche Schleifschlamm-Schicht 10 zusammengehalten wird, so dass nichts von dem Schleifschlamm 10 nach unten fallen kann.

Die Trägerschüssel 3 und die sie überdeckende Induktorplatte 9 können kreisförmig oder quadratisch ausgebildet sein oder eine andere z.B. rechteckförmige Form haben. Das Prinzip der Induktionsheizung bleibt davon unberührt.

Bei einem Schleifschlamm aus ferromagnetischen Werkstoffen bewirkt die Induktorplatte 9, dass die Wärme unmittelbar in den Stahl- oder Eisenteilen des Schleifschlamms entsteht. Wenn die ferromagnetischen Eigenschaften des Materials aber nur schwach ausgeprägt sind oder fehlen, wird die in Fig. 2 sichtbare Stahlplatte 13 auf die freie Oberfläche 16 der Schleifschlamm-Schicht 10 aufgelegt. Die induktiv erzeugte Wärme entsteht dann in der Stahlplatte 13 und wird an die darunter liegende Schleifschlamm-Schicht 10 abgegeben. Da die Trägerschüssel 3 und der Anlagerahmen 11 selbst nicht aufgeheizt werden sollen, sollten sie im Allgemeinen nicht aus ferromagnetischen Werkstoffen bestehen, sondern beispielsweise aus wärmebeständigen Kunststoffen. Eine aufgelegte ferromagnetische Stahlplatte kann in jedem Fall zur Erwärmung der abgeteilten Schleifschlamm-Schicht 10 beitragen.

Wenn der Schleifschlamm allerdings nicht nur aus Metallspänen und Schleiföl besteht, sondern durch weitere Anteile, beispielsweise Filterhilfsmittel und Additive, stärker verunreinigt ist, kann trotz ferromagnetischer Schleifspäne die Erwärmung des Schleifschlamms durch die Induktorplatte stark herabgesetzt sein. In diesen Fällen ist es vorteilhaft, wenn in die ausgebreitete flache Schleifschlamm-Schicht 10 noch eine weitere gelochte oder als Sieb ausgebildete Stahlplatte 24 in die Schleifschlamm-Schicht eingelegt ist. Diese zusätzliche Platte 24 mit den Durchgangsöffnungen 25 befindet sich dann inmitten der Schleifschlamm-Schicht 10. Die Platte 24 ist somit oberhalb der flachen Platte 4 angeordnet, welche den Boden der Trägerschüssel 3 bildet, oder oberhalb des durchlässigen Zwischenbodens 8. Die Induktionsheizung wirkt sich in diesem Falle in einer starken Erwärmung der zusätzlichen Stahlplatte 24 aus, und diese Wärme wird auf die Schleifschlamm-Schicht 10 übertragen, in der die zusätzliche Platte 24 eingebettet ist.

Eine derartige erwünschte zusätzliche Heizwirkung kann in bestimmten Fällen auch dazu führen, dass man mit Vorteil die flache Platte 4 der Trägerschüssel 3 zumindest teilweise aus einem ferromagnetischen Werkstoff ausbildet.

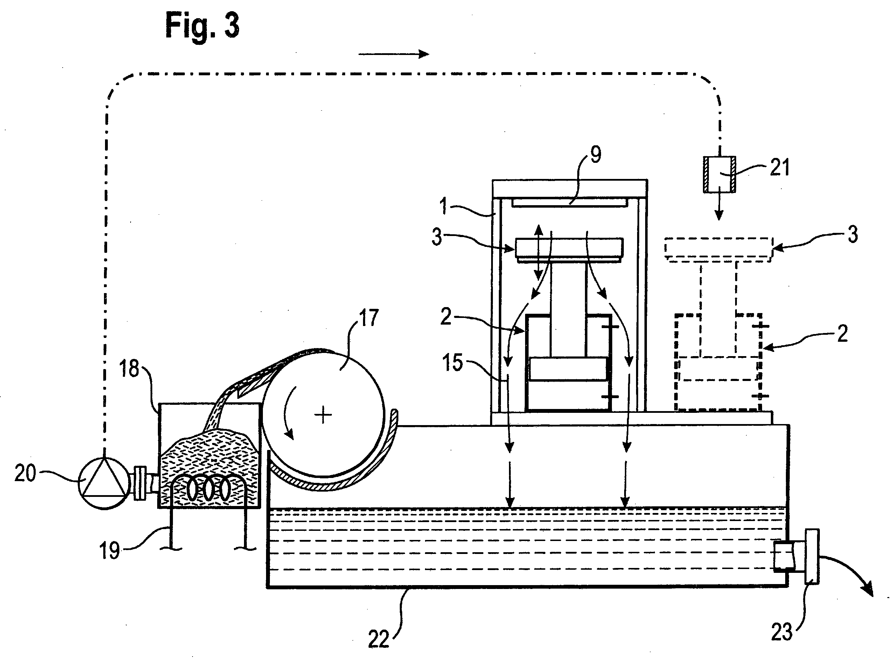

Aus Fig. 3 geht hervor, wie die bisher beschriebene Trennstation gemäß dem ersten Ausführungsbeispiel in eine verfahrenstechnische Anlage zum Abtrennen des Schleiföls aus Schleifschlamm eingefügt sein kann. Die dargestellte Anlage umfasst drei Behandlungsstationen, von denen die erste durch eine Magnetwalze 17 gebildet wird. Sie dient dazu, größere Metallteile aus dem Schleifschlamm zu entfernen und damit die nachfolgenden Trennvorgänge zu entlasten.

Von der Magnetwalze17 gelangt der Schleifschlamm in die zweite Behandlungsstation, die durch einen Behälter 18 gebildet wird. Der Behälter wird mittels eines Wärmeaustauschers 19 beheizt, der als Heizschlange angedeutet ist. Die Erwärmung der Heizflüssigkeit kann in einer besonderen, hier nicht dargestellten Einheit durch die Abwärme von Peripherieaggregaten erfolgen, die an der Kühlschmierstoff-Aufbereitungsanlage und der Schleifmaschine vorhanden sind. Durch diese Vorwärmung wird das Schleiföl des Schleifschlamms bereits in seiner Viskosität verringert, sodass der Schleifschlamm besser zu fördern ist. Mit einer Förderpumpe 20 wird der Schleifschlamm nunmehr der dritten Behandlungsstation zugeführt, die aus der Trennstation gemäß den Fig. 1 und 2 besteht und an der Zufuhrstation 21 beginnt.

Die bis hier beschriebene Anlage und die dazu gehörende Trennstation arbeiten wie folgt: Nach dem Durchlaufen der Magnetwalze 17 und des beheizten Behälters 18 wird der vorgewärmte Schleifschlamm von der Förderpumpe 20 der Zufuhrstation 21 zugeführt. Hier kommt es darauf an, den Schleifschlamm in einer dünnen Schicht auf der Trägerschüssel 3 auszubreiten. Die Maßnahmen hierzu sind in den Figuren nicht dargestellt. Als anschauliches Beispiel kann der Vergleich mit dem Ausbreiten eines Pizzateigs dienen. Eine Schichtdicke von 2 bis 30 mm hat sich als besonders vorteilhaft erwiesen. Eine davon abweichende Schichtdicke kann aber in vielen Fällen ebenfalls zu brauchbaren Ergebnissen führen; die Beschaffenheit des Schleifschlamms und die kinematische Viskosität des darin enthaltenen Schleiföls führen je nach Anwendungsfall zu unterschiedlichen Verfahrensweisen. Zu dicke Schichten führen dazu, dass es zu lange dauert, bis sich die auf der Trägerschüssel 3 befindliche Menge des Schleifschlamms 10 erwärmt und bis die Schleiföl-Anteile, deren Viskosität verringert ist, aus dem Schleifschlamm 10 ausgetragen werden.

Wie in Fig. 3 zu erkennen ist, befindet sich die Trägerschüssel 3 an der Zufuhrstation 21 in ihrer abgesenkten Stellung und ist zusammen mit der Hubvorrichtung 2 seitlich aus dem Maschinengestell 1 herausgefahren (gestrichelte Darstellung). Nach dem Ausbreiten des Schleifschlamms zu einer dünnen, auf der Trägerschüssel 3 befindlichen Schicht 10 wird die Hubvorrichtung 2 wieder zurück- und unter die Induktorplatte 9 gefahren. Die Hubvorrichtung 2 tritt nunmehr in Tätigkeit und bewegt die Trägerschüssel 3 mit der darauf befindlichen abgeteilten Schleifschlamm-Schicht 10 nach oben in den Wirkungsbereich der Induktorplatte 9 hinein. Die Trennstation ist derart ausgebildet, dass die Induktorplatte 9 erst dann elektromagnetisch aktiviert wird, wenn die jeweilige abgeteilte Schleifschlamm-Schicht 10 den Wirkungsbereich der Induktorplatte 9 erreicht hat. Der Vorgang kann selbsttätig gesteuert werden, sodass die Induktionsheizung sich von allein ein- oder ausschaltet, wenn die abgeteilte Schleifschlamm-Schicht 10 den Wirkungsbereich der Induktorplatte 9 erreicht oder verlässt.

Die Schleifschlamm-Schicht 10 wird nunmehr erwärmt. Die Temperatursteigerung kann unterschiedlich stark erfolgen, indem die Induktionsheizung mit unterschiedlicher Intensität und Dauer eingeschaltet wird. Der Prozess kann automatisch gesteuert werden und auf diese Weise der Einsparung von Energie dienen. Der Einfluss der Temperatur auf die Viskosität des Schleiföls ist beträchtlich. Beispielsweise hat ein typisches Schleiföl bei einer Temperatur von 40°C eine kinematische Viskosität von 10 cst und bei ca. 95 °C nur noch von 3 cst. Dabei können handelsübliche Schleiföle auf 80 bis 120 °C erwärmt werden, ohne dass sich seine ausschlaggebenden Eigenschaften ändern oder Additive zerstört werden.

Infolge seiner verringerten Viskosität können Anteile des Schleiföls die auf der Trägerschüssel 3 befindliche Schleifschlamm-Schicht 10 verlassen und über den durchlässigen Zwischenboden 8 und die Öffnungen 6 in der flachen Platte 4 der Trägerschüssel 3 abwärts auf den Boden des Maschinengestells 1 gelangen. Dieser Boden weist seinerseits wieder Öffnungen 7 auf (vgl. Fig. 1), die einen Zugang zu einem darunter liegenden Schleiföl-Sammelbehälter 22 bilden. Auf diese Weise gelangen die in der Schleifschlamm-Schicht 10 abgetrennten Anteile des Schleiföls in Form von Tropfen oder Rinnsalen schließlich in den Schleiföl-Sammelbehälter 22. Nach Ansammeln einer ausreichenden Menge kann das Schleiföl über den Entleerungsstutzen 23 der Wiederverwendung oder Aufbereitung zugeführt werden.

Bei sorgfältiger Verfahrensführung kann in der beschriebenen Weise ein Restölgehalt von 5 Prozent und weniger erzielt werden. Zuletzt muss die weitgehend getrocknete Schleifschlamm-Schicht 10 aus der Trägerschüssel 3 entfernt werden. Nach dem Ausführungsbeispiel gemäß Fig. 3 wird hierzu die Trägerschüssel 3 durch die Hubvorrichtung 2 von der Induktorplatte 9 entfernt, also nach unten abgesenkt. Zum Entladen der Trägerschüssel 3 wird die Hubvorrichtung 2 wieder seitlich aus dem Gestell 1 herausgefahren. Die Trägerschüssel 3 kann dann unterhalb der Zufuhrstation 21 oder an einer anderen Stelle entladen werden. Diese Vorgehensweise ist aber nicht zwingend; Das Be- und Entladen kann auch innerhalb des Gestells 1 vorgenommen werden, wenn unterhalb der Induktorplatte 9 genügend Platz zur Verfügung steht.

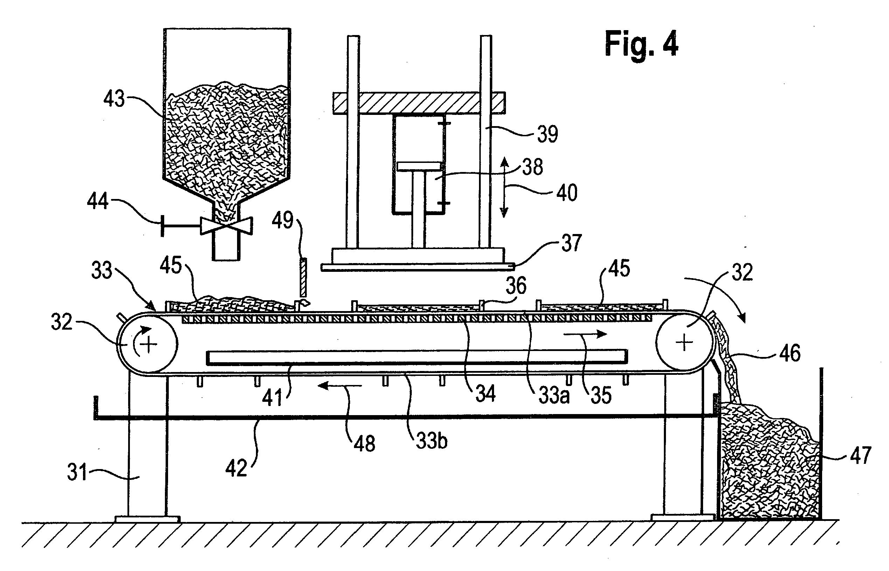

Ein zweites Ausführungsbeispiel für eine erfindungsgemäße Trennstation ist in Fig. 4 dargestellt. Danach sind an einem Maschinengestell 31 zwei Walzen 32 drehbar gelagert, von denen mindestens eine motorisch angetrieben ist. Über die Walzen 32 läuft ein Endlosförderer 33 nach dem Prinzip des Gurtförderers. Der Endlosförderer 33 kann als Filter-, Gewebe- oder Gliederband ausgebildet sein, das für Schleiföl durchlässig ist. Das obere Trum 33a des Endlosförderers 33 ist fast auf seiner gesamten Länge auf einer Lochplatte 34 abgestützt, so dass es nicht durchhängen kann. Die Länge des oberen Trums 33a bestimmt die Länge einer Förderstrecke; die Förderrichtung 35 verläuft in Fig. 4 von links nach rechts. Auf der Außenseite des Endlosförderers 33 sind Trägerschüsseln 36 in regelmäßigen Abständen ausgebildet, von denen in Fig. 4 die hochstehenden Ränder zu sehen sind. Da die Böden dieser Trägerschüsseln 36 ohnehin durchlässig sein müssen, können sie gut durch Glieder eines Gliederbandes, aber auch durch das Filter- oder Gewebeband selbst gebildet sein, das für den Endlosförderer 33 vornehmlich in Frage kommt.

Über der Längsmitte des Endlosförderers 33 befindet sich die Induktorplatte 37. Ihr Höhenabstand von den Trägerschüsseln 36 ist mittels einer Hubeinrichtung 38 veränderlich. Die Hubvorrichtung 38 ist wieder als Kolben-Zylinder-Einheit angedeutet. Die Induktorplatte 37 ist dabei an Führungsstangen 39 geführt, und die Richtung der Hubbewegung ist durch den Doppelpfeil 40 angegeben.

Im Innenraum zwischen den beiden Trums 33a, 33b des Endlosförderers 33 ist eine Sammelwanne 41 eingebaut, die sich fast über die gesamte Förderlänge des Endlosförderers 33 erstreckt und somit alle Tropfen oder Rinnsale des Schleiföls aufnehmen kann, die den auf dem Endlosförderer 33 befindlichen Schleifschlamm 45 verlassen. Der Ablauf für das in der Sammelwanne 41 befindliche Schleiföl ist seitlich vorgesehen, also senkrecht zur Zeichnungsebene.

Unterhalb der aus dem gesamten Längsförderer 33, den Walzen 32 und der Sammelwanne 41 bestehenden Baugruppe ist eine Auffangwanne 42 vorgesehen. Diese dient dazu, Reste von Schleifschlamm und Schleiföl aufzunehmen, die aus dem unteren Trum 33b des Längsförderers 33 herausfallen, wenn dieser in der Laufrichtung 48 leer zurückläuft und die geleerten Trägerschüsseln 36 nach unten gerichtet sind.

Bezogen auf die Förderrichtung 35 des Endlosförderers 33 ist vor der Hubvorrichtung 38 ein Eingangs-Schlammbehälter 43 angeordnet. In diesem befindet sich der vorgewärmte Schleifschlamm mit einem noch hohen Gehalt an Schleiföl. Über ein automatisch betätigtes Dosierventil 44 wird eine abgeteilte Teilmenge an Schleifschlamm 45 aus dem Eingangs-Schlammbehälter 43 abgeteilt, wenn sich eine leere Trägerschüssel 36 unter diesem befindet. Dabei ist wieder ein Auftrag in einer dünnen Schicht zu bewerkstelligen; wie das an dem Vergleich mit dem Pizza-Teig deutlich gemacht worden ist. Eine feststehende Rakel 49 dient dazu, grobe Ungleichmäßigkeiten in der Schichtdicke der Schleifschlamm-Schicht 45 zu beseitigen. Die Rakel 49 wird wirksam, indem die Trägerschüssel 36 an ihr vorbeiläuft.

In der Förderrichtung 35 hinter der Hubvorrichtung 38 ist die Entladestation in einer sehr einfachen Ausführung vorgesehen. Da die Trägerschüsseln 36 durch ihre Ausbildung auf dem flexiblen Endlosförderer 33 gleichfalls flexibel sind, reicht es aus, sie über die am Ende der Förderstrecke vorhandene Walze 32 hinwegzuführen, wobei die Trägerschüsseln 36 sich öffnen und nach unten kehren, so dass ein Schlammabwurf an der Stelle 46 zustande kommt. Der in seinem Schleiföl-Gehalt reduzierte Schleifschlamm 45 fällt in einen Ausgangs-Schlammbehälter 47.

Zum Betrieb der Trennstation gemäß Fig. 4 wird der Endlosförderer 33 taktweise, also intermittierend bewegt. Wenn eine leere Trägerschüssel 36 unter den Eingangs-Schlammbehälter 43 gelangt, wird mittels des Dosierventils 44 automatisch eine abgeteilte Teilmenge 45 des Schleifschlamms in dieser Trägerschüssel 36 zu einer dünnen Schicht ausgebreitet. In der anschließenden Taktbewegung des Endlosförderers 33 gelangt diese abgeteilte Schleifschlamm-Schicht 45 unter die Induktorplatte 37. Mittels der Hubvorrichtung 38 wird zugleich die Induktorplatte 37 abwärts gefahren, bis die abgeteilte Schleifschlamm-Schicht 45 sich im Wirkungsbereich der Induktionsheizung befindet. Die Induktionsheizung schaltet sich dann automatisch ein, d.h. die Induktorplatte 37 wird elektromagnetisch aktiviert. Für den Heizvorgang gelten dieselben Einzelheiten, die schon zum ersten Ausführungsbeispiel vorgetragen worden sind.

Diejenigen Anteile des Schleiföls, deren Viskosität durch das Aufheizen genügend verringert worden ist, lösen sich danach aus der Schleifschlamm-Schicht 45 und wandern in Form von Rinnsalen oder Tropfen nach unten durch das obere Trum 33a des Endlosförderers 33 und die Lochplatte 34 hindurch in die Sammelwanne 41. Mit dem nächsten Arbeitstakt wird die Induktionsheizung abgeschaltet, und der Restschlamm wird an der Stelle 46 von dem Endlosförderer 33 abgeworfen und gelangt in den Ausgangs-Schlammbehälter 47.

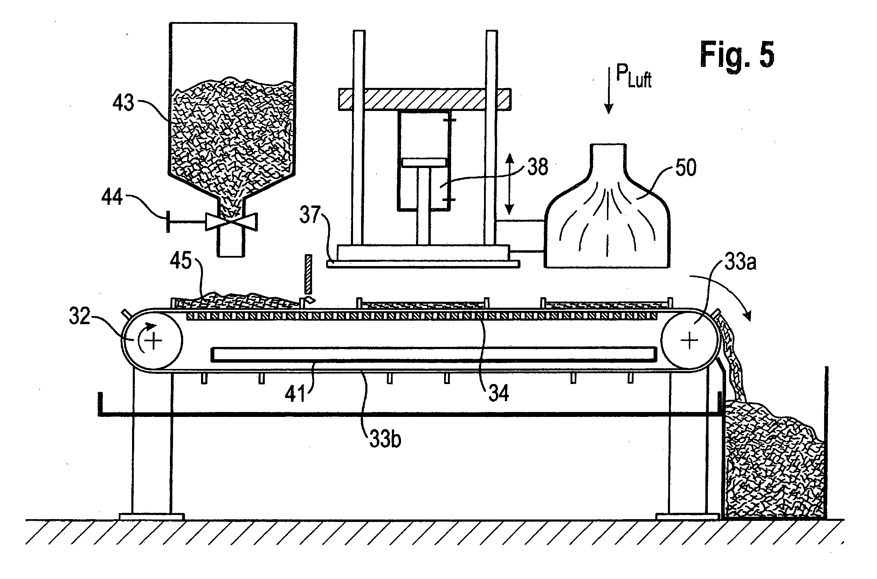

Das Ausführungsbeispiel nach Fig. 5 entspricht weitgehend demjenigen gemäß Fig.4. Deshalb sind die wichtigsten Einzelteile der Trennstation gemäß Fig. 5 mit denselben Bezugsziffern wie in Fig. 4 bezeichnet. Unterschiedlich ist in Fig. 5 die Anordnung eines Blaskopfes 50, der mit der Hubvorrichtung 38 der Induktorplatte 37 fest verbunden ist. Der seitliche Abstand zu der Induktorplatte 37 ist dabei so festgelegt, dass die folgende Wirkung zustande kommt: wenn die Induktorplatte 37 sich genau über einer Trägerschüssel 36 befindet und diese überdeckt, befindet sich der Blaskopf 50 genau über der benachbarten Trägerschüssel 36, die sich in der Förderrichtung 35 des Endlosförderers 33 weiter vorn befindet. Während die Induktorplatte 37 die dar-unter befindliche abgeteilte Schleifschlamm-Schicht 45 aufheizt, wird durch den Blaskopf 50 ein Luftstrom auf die daneben befindliche Schleifschlamm-Schicht 45 gefördert, die bereits aufgeheizt worden war. Schleiföl-Tropfen, die bereits eine verringerte Viskosität aufweisen, aber sich noch nicht aus der Schleifschlamm-Schicht 45 gelöst haben, werden dadurch ebenfalls aus der Schleifschlamm-Schicht 45 herausgetrieben. Damit auch diese Schleiföl-Tropfen aufgefangen werden können, ist die Sammelwanne 41 bei der Ausführung gemäß Fig. 5 bis an die Walze 32 heran verlängert, die sich am Ende der Förderstrecke befindet.

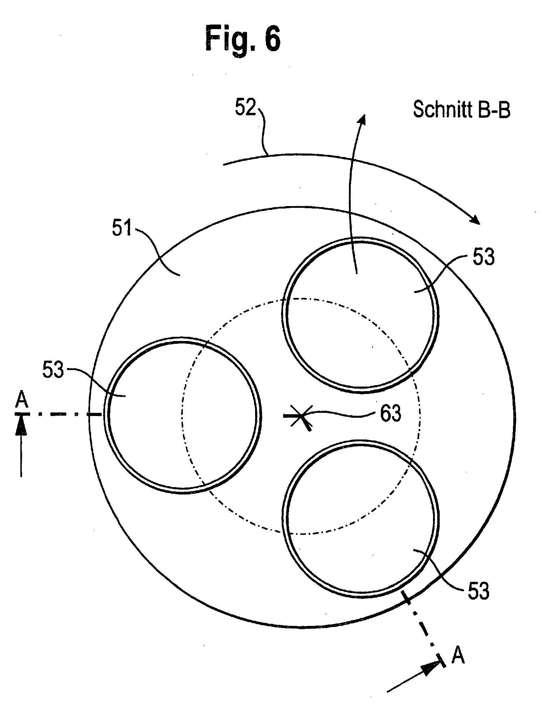

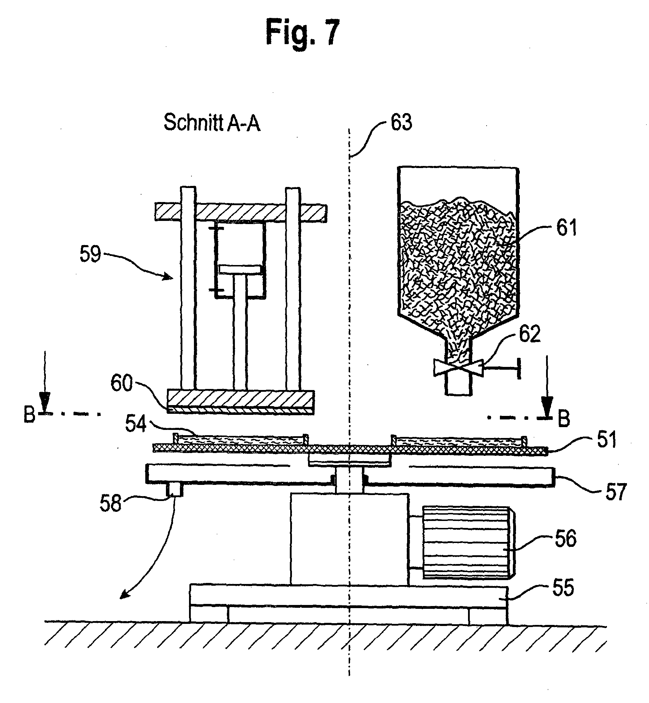

Bei der dritten Ausführungsform gemäß den Figuren 6 und 7 ist der Endlosförderer als Kreisförderer 51 ausgebildet. In Fig. 6, die einem Schnitt B-B durch die Fig. 7 entspricht, ist nur schematisch das Prinzip gezeigt. Der Kreisförderer 51 hat die Form einer flachen, um ihre Mittelachse 63 drehbaren Kreisscheibe, bildet also ein Karussell. Die Drehrichtung des Kreisförderers 51 ist mit dem Richtungspfeil 52 gekennzeichnet. Auf dem Kreisförderer 51 befinden sich drei kreisförmige Trägerschüsseln 53 zur Aufnahme und Behandlung von abgeteilten Schleifschlamm-Schichten 54, vgl. Fig. 7. Die Wirkungsweise ist im Prinzip dieselbe wie bei der schon beschriebenen Trennstation mit dem Gurtförderer, der in linearer Richtung taktweise bewegt wird. Jede der drei Trägerschüsseln 53 durchläuft nacheinander die Behandlungseinheiten a) des Beladens und Ausbreitens, b) des induktiven Aufheizens und c) des Entladens.

Fig. 7, die einem Schnitt entlang der Linie A-A in Fig. 6 entspricht, zeigt weitere Einzelheiten. Auf einem Gestell 55 ist eine Antriebseinheit 56 montiert, die den Kreisförderer 51 taktweise in Drehung versetzt. Der Kreisförderer 51 ist im Bereich der Trägerschüsseln 53 durchlässig, z.B. mittels einer Gewebeauflage. Unterhalb des Kreisförderers 51 befindet sich eine feststehende Tropfwanne 57 mit der Ablauföffnung 58 für das Schleiföl, das die abgeteilten Schlammschichten 54 verlassen hat. Oberhalb des Kreisförderers 51 sind eine Hubvorrichtung 59 mit einer Induktorplatte 60 sowie ein Eingangs-Schlammbehälter 61 mit einem Dosierventil 62 dargestellt.

Die Ausführungen nach den Figuren 4 bis 6 zeigen Endlosförderer 33 oder Kreisförderer 51 mit jeweils drei Trägerschüsseln 36 bzw. 53. Diese Zahl ist jedoch keinesfalls zwingend. Allein schon die Anordnung des Blaskopfes 50 gemäß Fig. 5 kann bedeuten, dass dieser als weitere Behandlungsstation auch eine weitere Trägerschüssel 36 erfordert. Ähnlich kann es zweckmäßig sein, in der Förderrichtung 35 der Trennstation nach Figur 4 oder in der Drehrichtung 52 des Kreisförderers 51 nach Fig. 6 vor der Station mit der Induktorplatte 37 bzw. 60 eine Aufwärmstation anzuordnen, so dass die abgeteilten Schleifschlamm-Schichten 45 bzw. 54 vor dem Erreichen der Induktorplatte 37 bzw. 60 noch einmal gesondert aufgeheizt sind. In solchen Fällen müsste noch eine weitere Trägerschüssel 36 bzw. 53 auf den Fördereinrichtungen untergebracht werden. Auch allgemeine fertigungstechnische Gründe könnten eine höhere Anzahl von Trägerschüsseln notwendig machen.

In den bisher beschriebenen Trennstationen mit Endlosförderern wurde von einem taktweisen, also diskontinuierlichen Betrieb der Fördereinrichtungen ausgegangen. In diesen Fällen ist die Verweildauer der Trägerschüssel 36, 53 unter der Induktorplatte 37, 60 von Einfluss auf die in die Schleifschlamm-Schicht 45, 54 eingebrachte Wärmemenge.

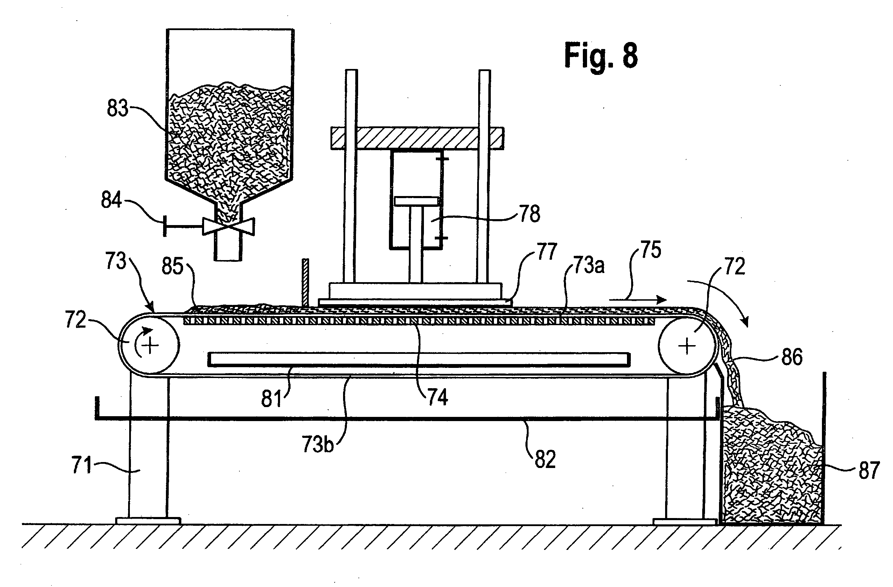

Das erfindungsgemäße Verfahren kann aber auch im kontinuierlichen Betrieb durchgeführt werden. Ein Beispiel hierfür ist in der Fig. 8 gezeigt. Dabei sind auf einem Gestell 71 zwei Walzen 72 gelagert, über die ein Gurtförderer 73 in der Art eines Förderbandes läuft. Der Gurtförderer hat ein oberes Trum 73a und ein unteres Trum 73b und ist wieder als Filter-, Gewebe- oder Gliederband ausgebildet, das für Schleiföl durchlässig ist. Das obere Trum 73a ist auf einer Lochplatte 74 abgestützt und bewegt sich in der Förderrichtung 75. Dabei läuft es in kontinuierlichem Betrieb unter der stationär angeordneten Induktorplatte 77 hindurch. Eine Hubvorrichtung 78 dient im Falle der Fig. 8 nur dazu, den jeweils richtigen Abstand von dem oberen Trum 73a einmal einzustellen oder zur Durchführung von Wartungsarbeiten. Im laufenden Betrieb ist die Induktorplatte aber räumlich fest und ständig aktiviert. Die übrige bauliche Ausbildung entspricht der Darstellung gemäß den Figuren 4 und 5. Die Schleifschlamm-Schicht 85 wird auch hier von einem Eingangs-Schlammbehälter 83 über ein Dosierventil 84 auf das obere Trum 73a des Gurtförderers 73 aufgebracht. An der Stelle 86 erfolgt der Abwurf des Schleifschlamms 85 von dem oberen Trum in einen Ausgans-Schlammbehälter 87. Die sich aus der Schleifschlamm-Schicht 85 lösenden Anteile des Schleiföls gelangen durch den Gurtförderer 73 und die Lochplatte 74 hindurch in die Sammelwanne 81. In der Auffangwanne 82 können Reste des Schleifschlamms aufgefangen werden, die beim Abwurf noch an dem unteren Trum 73b des Gurtförderers 73 haften geblieben sind.

Der wesentliche Unterschied besteht darin, dass der in dem Eingangs-Schlammbehälter 83 befindliche Schleifschlamm über das Dosierventil 84 kontinuierlich auf dem sich ebenfalls kontinuierlich bewegenden Gurtförderer 73 abgelegt wird. Auf diese Weise entsteht eine endlose und kontinuierlich bewegte Schicht des Schleifschlamms, die unter der Induktorplatte 77 hindurchläuft. Abgesehen von der steuerbaren Leistung der Induktorplatte, ist hier für die in die Schleifschlamm-Schicht 85 eingebrachte Wärmemenge maßgebend, mit welcher Geschwindigkeit das obere Trum 73a des Gurtförderers 73 unter der Induktorplatte hindurchläuft.

### Bezugsziffern

Fig. 1 bis 3
   - 1: Gestell
   - 2: Hubvorrichtung
   - 3: Trägerschüssel
   - 4: flache Platte
   - 5: Rand
   - 6: Öffnung
   - 7: Öffnung
   - 8: durchlässiger Zwischenboden
   - 9: Induktorplatte
   - 10: abgeteilte Schleifschlamm-Schicht
   - 11: Anlagerahmen
   - 12: Feder
   - 13: Stahlplatte
   - 14: Richtung der Hubbewegung
   - 15: Abflussrichtung
   - 16: freie Oberfläche
   - 17: Magnetwalze
   - 18: Behälter
   - 19: Wärmeaustauscher
   - 20: Förderpumpe
   - 21: Zufuhrstation
   - 22: Schleiföl-Sammelbehälter
   - 23: Entleerungsstutzen
   - 24: gelochte Stahlplatte
   - 25: Durchgangsöffnung
   Fig. 4/5
   - 31: Maschinengestell
   - 32: Walze
   - 33: Endlosförderer
   - 33a: oberes Trum
   - 33b: unteres Trum
   - 34: Lochplatte

   - 35: Förderrichtung
   - 36: Trägerschüssel
   - 37: Induktorplatte
   - 38: Hubvorrichtung
   - 39: Führungsstange
   - 40: Richtung der Hubbewegung
   - 41: Sammelwanne
   - 42: Auffangwanne
   - 43: Eingangs-Schlammbehälter
   - 44: Dosierventil
   - 45: abgeteilte Schleifschlamm-Schicht
   - 46: Stelle des Schleifschlamm-Abwurfs
   - 47: Ausgangs-Schlammbehälter
   - 48: Laufrichtung
   - 49: feststehende Rakel
   - 50: Blaskopf
Fig. 6/7
   - 51: Kreisförderer
   - 52: Drehrichtung
   - 53: Trägerschüssel
   - 54: abgeteilte Schleifschlamm-Schicht
   - 55: Maschinengestell
   - 56: Antriebseinheit
   - 57: Tropfwanne
   - 58: Ablauföffnung
   - 59: Hubvorrichtung
   - 60: Induktorplatte
   - 61: Eingangs-Schlammbehälter
   - 62: Dosierventil
   - 63: Mittelachse
Fig. 8
   - 71: Gestell
   - 72: Walze
   - 73: Gurtförderer
   - 73a: oberes Trum
   - 73b: unteres Trum
   - 74: Lochplatte
   - 75: Förderrichtung
   - 77: Induktorplatte
   - 78: Hubvorrichtung
   - 81: Sammelwanne
   - 82: Auffangwanne
   - 83: Eingangs-Schlammbehälter
   - 84: Dosierventil
   - 85: Schleifschlamm-Schicht
   - 86: Stelle des Schleifschlamm-Abwurfs
   - 87: Ausgangs-Schlammbehälter

## Patentansprüche

1. Verfahren zum Abtrennen von Schleiföl aus Schleifschlämmen, mit Erwärmen des Schleifschlamms durch Induktionsheizung,
**gekennzeichnet durch** die folgenden Verfahrenschritte:
a) der Schleifschlamm wird auf einem Träger zu einer flachen Schicht (10, 45, 54) von geringer Höhe ausgebreitet;
b) die freie Oberfläche (16) der flachen Schleifschlamm-Schicht (10, 45, 54) wird dem Wirkungsbereich einer von oben einwirkenden Induktorplatte (9, 37, 60) ausgesetzt, indem Induktorplatte (9, 37, 60) und Träger relativ zueinander abstandsverändemd bewegt werden;
c) das **durch** die induktive Erwärmung in seiner Viskosität reduzierte Schleiföl wird durch Öffnungen in dem Träger nach unten abgezogen;
d) die Schleifschlamm-Schicht (10, 45, 54) wird außerhalb des Wirkungsbereiches der Induktorplatte (9, 37, 60) von dem Träger entfernt.

2. Verfahren nach Anspruch 1, **dadurch gekennzeichnet, dass** die flache Schleifschlamm-Schicht (10, 45, 54) auf den Träger mit einer Dicke von 2 bis 30 mm aufgetragen wird, insbesondere außerhalb des Wirkungsbereiches der Induktorplatte (9, 37, 60) auf den Träger aufgebracht wird.

3. Verfahren nach Anspruch 1 oder 2, **dadurch gekennzeichnet, dass** auf die freie Oberfläche (16) der flachen Schleifschlamm-Schicht (10, 45, 54) eine Stahlplatte (10) aufgelegt wird, die sich im Wirkungsbereich der Induktorplatte (9, 37, 60) zwischen dieser und der freien Oberfläche (16) der Schleifschlamm-Schicht (10, 45, 54) befindet, oder dass in die flache Schleifschlamm-Schicht (10, 45, 54) eine gelochte oder als Sieb ausgebildete Stahlplatte (24) im Abstand über dem Träger eingelegt ist.

4. Verfahren nach einem der Ansprüche 1 bis 3, **dadurch gekennzeichnet, dass** die Schleifschlamm-Schicht (10, 45, 54) als abgeteilte Teilmenge auf einer Trägerschüssel (3, 36, 53) ausgebreitet wird, die parallel zur Induktorplatte (9, 37, 60) gerichtet ist, dass die Induktorplatte (9, 37, 60) und die Trägerschüssel (3, 36, 53) relativ zueinander verfahren werden und nacheinander eine der folgenden Stellungen erreichen:
a) eine Beladestellung, in der die Trägerschüssel (3, 36, 53) und die Induktorplatte (9, 37, 60) voneinander entfernt sind und die Teilmenge des Schleifschlamms (10, 45, 54) auf der Trägerschüssel (3, 36, 53) ausgebreitet wird;
b) eine Wirkstellung, in der die Trägerschüssel (3, 36, 53) sich nahe an der Induktorplatte (9, 37, 60) und die abgeteilte Schleifschlamm-Schicht (10, 45, 54) sich im Wirkungsbereich der Induktorplatte (9, 37, 60) befindet;
c) eine Entladestellung, in der die Trägerschüssel (3, 36, 53) und die Induktorplatte (9, 37, 60) gleichfalls voneinander entfernt sind und die abgeteilte Schleifschlamm-Schicht (10, 45, 54), deren Gehalt an Schleiföl nunmehr verringert ist, an eine Sammel- oder Transporteinrichtung übergeben wird.

5. Verfahren nach Anspruch 4, **dadurch gekennzeichnet, dass** die Trägerschüssel (3) in den Wirkungsbereich einer stationär angebrachten Induktorplatte (9) verbracht wird, indem sie von unten an die stationär angebrachte, waagerecht liegende Induktorplatte (9) herangefahren wird, während das Be- und Entladen der Trägerschüssel (3) in deren abgesenkter Stellung erfolgt.

6. Verfahren nach Anspruch 5, **dadurch gekennzeichnet, dass** die Trägerschüssel (3) in ihrer abgesenkten Stellung waagerecht in ihre Be- oder Entladestellung verfahren wird.

7. Verfahren nach Anspruch 4, **dadurch gekennzeichnet, dass** unterhalb der Induktorplatte (37, 60) ein Endlosförderer (33, 51), auf dem mindestens drei Trägerschüsseln (36, 53) ausgebildet sind, in waagerechter Richtung taktweise bewegt wird und dass dabei an abgeteilten Teilmengen des Schleifschlamms (45, 54) nacheinander die Vorgänge des a) Ausbreitens, b) induktiven Heizens und c) Entladens durchgeführt werden, insbesondere dass dabei auch die Induktorplatte (37, 60) in der Höhe verfahren wird.

8. Verfahren nach Anspruch 7, **dadurch gekennzeichnet, dass** der Endlos- Fördervorgang nach dem Prinzip eines Gurtförderers mit geradliniger Förderrichtung (35) oder nach dem Prinzip eines Kreisförderers (51) betrieben wird.

9. Verfahren nach Anspruch 7 oder 8, **dadurch gekennzeichnet, dass** zwischen den Vorgängen des induktiven Heizens und des Entladens die abgeteilte Schleifschlamm-Schicht (45, 54) auf der Trägerschüssel (36,53) mit einem Luftstrom behandelt wird, welcher weiteres Schleiföl aus der abgeteilten Schleifschlamm-Schicht (45, 54) heraustreibt oder-zieht.

10. Verfahren nach einem der Ansprüche 4 bis 9, **dadurch gekennzeichnet, dass** die Induktorplatte (9, 37, 60) erst dann elektromagnetisch aktiviert wird, wenn die jeweilige abgeteilte Schleifschlamm-Schicht (10, 45, 54) den Wirkungsbereich der Induktorplatte (9, 37, 60) vollständig erreicht hat.

11. Verfahren nach einem der Ansprüche 1 bis 3, **dadurch gekennzeichnet, dass** es mit einem kontinuierlich bewegten Gurtförderer (73) durchgeführt wird, dessen oberes Trum (73a) als Träger für eine kontinuierlich abgelegte Schleifschlamm-Schicht (85) dient und diese unter einer ständig aktivierten Induktorplatte (77) vorbeiführt, wobei die Laufgeschwindigkeit des oberen Trums (73a) die Wärmeeinbringung in die Schleifschlamm-Schicht (85) steuert.

12. Verfahren nach einem der Ansprüche 1 bis 11, **dadurch gekennzeichnet, dass** es in Verbindung mit einer ersten Vorbehandlung zum mechanischen Abscheiden von Schleiföl aus dem Schleifschlamm und einer sich an diese anschließende zweite Vorbehandlung zur Vorwärmung des Schleifschlamms betrieben wird, insbesondere dass das mechanische Abscheiden durch Magnete, Zentrifugieren oder Sedimentation erfolgt und dass die Wärme zum Vorwärmen des Schleifschlamms aus dem Rückkühlen des zum Schleifen erforderlichen Kühlschmierstoffs und/oder aus der Verlustwärme von Peripherie-Aggregaten von Schleifmaschinen ausgenutzt wird.

13. Verfahren nach einem der Ansprüche 1 bis 12, **dadurch gekennzeichnet, dass** der Schleifschlamm soweit erwärmt wird, dass Restmengen des Schleiföls verbrannt werden.

14. Trennstation, in der aus Schleifschlämmen Schleiföl abgetrennt wird, mit einer Einrichtung, in der der Schleifschlamm induktiv erwärmt wird, zur Durchführung des Verfahrens nach einem der Ansprüche 4 bis 13, **dadurch gekennzeichnet, dass** die Trennstation eine auf einer Hubvorrichtung (2) angeordnete Trägerschüssel (3) aufweist, welche die abgeteilte Teilmenge in der Form einer flachen Schleifschlamm-Schicht (10) aufnimmt und mit Öffnungen (6) versehen ist, durch die das erwärmte Schleiföl abfließt, und dass oberhalb der Trägerschüssel (3) eine Induktorplatte (9) angeordnet ist, wobei die Trägerschüssel (3) entweder eine abgesenkte Be- und EntladeStellung oder eine nach oben an die Induktorplatte (9) herangefahrene Heizstellung einnimmt und der Wechsel zwischen den beiden Stellungen durch die Hubvorrichtung (2) erfolgt.

15. Trennstation, in der aus Schleifschlämmen Schleiföl abgetrennt wird, mit einer Einrichtung, in der der Schleifschlamm induktiv erwärmt wird, zur Durchführung des Verfahrens nach einem der Ansprüche 7 bis 13, **dadurch gekennzeichnet, dass** die Trennstation die folgenden Merkmale aufweist:
a) einen in einer waagerechten Ebene taktweise bewegten Endlosförderer (33, 51) mit mindestens drei Trägerschüsseln (36, 53) zur Aufnahme von abgeteilten Schleifschlamm-Schichten (45, 54);
b) über dem Endlosförderer (33, 51) angebrachte Behandlungseinheiten zum Abfüllen, induktiven Aufheizen und Entfernen der in den Trägerschüsseln (36, 53) befindlichen Schleifschlamm-Schichten (45, 54);
c) in der Behandlungseinheit zum Aufheizen eine Hubvorrichtung (38, 59) mit einer daran befindlichen Induktorplatte (37, 60), die zwischen einer wirkungslosen angehobenen Stellung und einer in den Wirkungsbereich der jeweils darunter befindlichen Schleifschlamm-Schicht (45, 54) verbrachten abgesenkten Stellung bewegt wird, und
d) ein Sammelsystem mit Öffnungen (6, 7) in den Trägerschüsseln (36, 53) und den Endlosförderern (33, 51), wodurch die aus den Schleifschlamm-Schichten (45, 54) austretenden Schleiföl-Mengen in Sammelwannen (41, 57) geleitet werden, die sich im unteren Bereich der Trennstation befinden.

16. Trennstation nach Anspruch 15, **dadurch gekennzeichnet, dass** der Endlos-Förderer als Gurtförderer mit linearer Förderrichtung (35) oder als Kreisförderer (51) nach Art eines Karussells ausgebildet ist.

17. Trennstation nach Anspruch 15 oder 16, **dadurch gekennzeichnet, dass** als weitere Behandlungseinheit ein Blaskopf (50), der in der Förderrichtung (35) des Endlosförderers (33) hinter der Induktorplatte (37) angeordnet und mit der Hubvorrichtung (38) verbunden ist, wodurch auf eine Trägerschüssel (36) nach dem Verlassen der Induktorplatte (37) ein Blasluftstrom gerichtet wird, der weitere Anteile von Schleiföl aus der Schleifschlamm-Schicht (45) heraustreibt, oder eine Vorwärmstelle vorgesehen ist, die sich in der Förderrichtung (35, 52) des Endlosförderers (33, 51) vor der Induktorplatte (37, 60) befindet und zum Vorwärmen der abgeteilten Schleifschlamm-Schicht (45, 54) dient.

18. Trennstation nach einem der Ansprüche 14 bis 17, **dadurch gekennzeichnet, dass** die Trägerschüssel (3, 36, 53) aus einer flachen Platte (4) mit den Öffnungen (6) und einem nach oben ragenden Rand (5) besteht, insbesondere die Trägerschüssel (3) einen durchlässigen Zwischenboden (8) aus einem Siebmaterial oder einer Lochplatte aufweist, der sich im Abstand über der flachen Platte (4) befindet, deren Öffnungen (6) groß im Verhältnis zu denen des Zwischenbodens (8) sind.

19. Trennstation nach Anspruch 18, **dadurch gekennzeichnet, dass** der Rand (5) von einem Anlagerahmen (11) umgeben ist, der sich elastisch nachgiebig an der Trägerschüssel (3) abstützt und in der Heizstellung der Trägerschüssel (3) von unten gegen die Induktorplatte (9) gedrückt ist, wodurch die auf der Trägerschüssel (3) befindliche flache Schleifschlamm-Schicht (10) zusammengehalten ist.

20. Trennstation nach Anspruch 18 oder 19, **dadurch gekennzeichnet, dass** in der Heizstellung der Trägerschüssel (3) zwischen der flachen Schleifschlamm-Schicht (10) und der Unterseite der Induktorplatte (9) eine zusätzliche Stahlplatte (13) eingelegt ist, die direkt auf der Schleifschlamm-Schicht (1) oder auf dem Anlagerahmen (11) aufliegt.

21. Trennstation nach einem der Ansprüche 18 bis 20, **dadurch gekennzeichnet, dass** inmitten der abgeteilten Schleifschlamm-Schicht (45, 54), die sich in der Trägerschüssel (36, 53) befindet, eine gelochte oder als Sieb ausgebildete Stahlplatte (24) eingelegt ist, insbesondere dass die den Boden der Trägerschüssel (36, 53) bildende flache Platte (4) aus einem ferromagnetischen Werkstoff besteht.

22. Trennstation, in der aus Schleifschlämmen Schleiföl abgetrennt wird, mit einer Einrichtung, in der der Schleifschlamm induktiv erwärmt wird, zur Durchführung des Verfahrens nach Anspruch 11, **dadurch gekennzeichnet, dass** ein in einer waagerechten Ebene kontinuierlich bewegter Gurtförderer (73) nach Art eines Förderbandes vorgesehen ist, dessen Bewegungsbahn zwischen einer Beladestation und einer Entladestation unterhalb einer ständig aktivierten Induktorplatte (77) verläuft, wodurch eine auf dem Gurtförderer (73) befindliche endlose Schleifschlamm-Schicht (85) bereichsweise erwärmt und Anteile des in der endlosen Schleifschlamm-Schicht (85) befindlichen Schleiföls zum Abtropfen gebracht werden.

23. Trennstation nach einem der Ansprüche 14 bis 22, **dadurch gekennzeichnet, dass** die Einrichtung zur induktiven Erwärmung des Schleifschlamms so regelbar ist, dass nach Abfließen erwärmten Schleiföls Restmengen des Schleiföls verbrennbar sind, insbesondere dass zusätzlich eine der Einrichtung zur induktiven Erwärmung des Schleiföls nachgelagerte Energiequelle zur Verbrennung von Restmengen des Schleiföls vorgesehen ist.

24. Verfahrenstechnische Anlage, in der aus Schleifschlämmen Schleiföl abgetrennt wird, indem eine mechanisch wirkende Trennvorrichtung mit einer induktiven Beheizung kombiniert wird, **dadurch gekennzeichnet, dass** sie drei miteinander verbundene Behandlungsstationen umfasst, nämlich
- eine erste Behandlungsstation, in der die mechanisch wirkende Trennvorrichtung auf einen kontinuierlich fließenden Strom des Schleifschlamms einwirkt, und
- eine zweite Behandlungsstation, die als von Wärmeaustauschern beheizter Behälter ausgebildet ist, den aus der ersten Behandlungsstation abfließenden Strom des Schleifschlamms übernimmt, zwischenspeichert und vorwärmt, sowie
- eine dritte Behandlungsstation, die als Trennstation nach einem der Ansprüche 14 bis 23 ausgebildet ist.

25. Verfahrenstechnische Anlage nach Anspruch 24, **dadurch gekennzeichnet, dass** als mechanisch wirkende Trennvorrichtung der ersten Behandlungsstation eine Magnetwalze, eine Zentrifuge oder ein Sedimentationsbecken vorgesehen ist, insbesondere dass die Wärmeaustauscher des beheizten Behälters zum Aufheizen des Heizmediums an eine Anlage zum Rückkühlen von Kühlschmierstoffen der Schleifmaschinen angeschlossen sind.

26. Verfahrenstechnische Anlage nach Anspruch 24 oder 25, **dadurch gekennzeichnet, dass** eine vierte Behandlungsstation vorgesehen ist, welche als Trennstation nach Anspruch 23 ausgebildet ist.

## Claims

1. Method for separating grinding oil from grinding slurries, with heating of the grinding slurry by induction heating,
**characterized by** the followizng method steps:
a) the grinding slurry is spread out on a carrier into a flat layer (10, 45, 54) of low height;
b) the free surface (16) of the flat layer of grinding slurry (10, 45, 54) is exposed to the effective range of an inductor plate (9, 37, 60) acting from above, in that the inductor plate (9, 37, 60) and the carrier are moved in relation to one another with varying distance;
c) the grinding oil reduced in its viscosity by the inductive heating is drawn off downward through openings in the carrier;
d) the layer of grinding slurry (10, 45, 54) is removed from the carrier outside the effective range of the inductor plate (9, 37, 60).

2. Method according to Claim 1, **characterized in that** the flat layer of grinding slurry (10, 45, 54) is applied to the carrier with a thickness of 2 to 30 mm in particular, is applied to the carrier outside the effective range of the inductor plate (9, 37, 60).

3. Method according to Claim 1 or 2, **characterized in that** a steel plate (13) is placed onto the free surface (16) of the flat layer of grinding slurry (10, 45, 54), which plate is located in the effective range of the inductor plate (9, 37, 60) between the latter and the free surface (16) of the layer of grinding slurry (10, 45, 54), or **in that** a steel plate (24), which is perforated or formed as a screen, is placed in the flat layer of grinding slurry (10, 45, 54) at a distance above the carrier.

4. Method according to one of Claims 1 to 3, **characterized in that** the layer of grinding slurry (10, 45, 54) is spread out as a divided portion on a carrier bowl (3, 36, 53), which is parallel to the inductor plate (9, 37, 60), **in that** the inductor plate (9, 37, 60) and the carrier bowl (3, 36, 53) are moved in relation to one another and one after the other reach one of the following positions:
a) a loading position, in which the carrier bowl (3, 36, 53) and the inductor plate (9, 37, 60) are removed from one another and the portion of grinding slurry (10, 45, 54) is spread out on the carrier bowl (3, 36, 53);
b) an effective position, in which the carrier bowl (3, 36, 53) is close to the inductor plate (9, 37, 60) and the divided layer of grinding slurry (10, 45, 54) is located in the effective range of the inductor plate (9, 37, 60);
c) an unloading position, in which the carrier bowl (3, 36, 53) and the inductor plate (9, 37, 60) are likewise removed from one another and the divided layer of grinding slurry (10, 45, 54), the content of grinding oil of which has now been reduced, is transferred to a collecting or transporting device.

5. Method according to Claim 4, **characterized in that** the carrier bowl (3) is brought into the effective range of a stationarily mounted inductor plate (9), **in that** it is brought up to the stationarily mounted, horizontally lying inductor plate (9) from below, while the loading and unloading of the carrier bowl (3) takes place in its lowered position.

6. Method according to Claim 5, **characterized in that**, in its lowered position, the carrier bowl (3) is moved horizontally into its loading or unloading position.

7. Method according to Claim 4, **characterized in that** an endless conveyor (33, 51), on which there are formed at least three carrier bowls (36, 53), is moved cyclically in a horizontal direction underneath the inductor plate (37, 60), and **in that** the operations of a) spreading, b) inductively heating and c) unloading are thereby carried out one after the other on divided portions of the grinding slurry (45, 54), in particular **in that** also the inductor plate (37, 60) is thereby moved in height.

8. Method according to Claim 7, **characterized in that** the endless conveying operation is operated on the principle of a belt conveyor with a conveying direction (35) in a straight line or on the principle of a circular conveyor (51).

9. Method according to Claim 7 or 8, **characterized in that**, between the operations of inductively heating and unloading, the divided layer of grinding slurry (45, 54) on the carrier bowl (36, 53) is treated with a stream of air, which drives or draws out further grinding oil from the divided layer of grinding slurry (45, 54).

10. Method according to one of Claims 4 to 9, **characterized in that** the inductor plate (9, 37, 60) is only electromagnetically activated whenever the respective divided layer of grinding slurry (10, 45, 54) has completely reached the effective range of the inductor plate (9, 37, 60).

11. Method according to one of Claims 1 to 3, **characterized in that** it is carried out with a continuously moved belt conveyor (73), the upper strand (73a) of which serves as a carrier for a continuously deposited layer of grinding slurry (85) and carries said layer underneath and past a constantly activated inductor plate (77), the running speed of the upper strand (73a) controlling the introduction of heat into the layer of grinding slurry (85).

12. Method according to one of Claims 1 to 11, **characterized in that** it is operated in conjunction with a first pretreatment for the mechanical separation of grinding oil from the grinding slurry and a then following second pretreatment for preheating the grinding slurry, in particular **in that** the mechanical separation takes place by magnets, centrifuging or sedimentation and **in that** the heat for preheating the grinding slurry is taken from the re-cooling of the cooling lubricant required for the grinding and/or from the lost heat of peripheral units of grinding machines.

13. Method according to one of Claims 1 to 12, **characterized in that** the grinding slurry is heated to the extent that residual amounts of the grinding oil are burned.

14. Separating station, in which grinding oil is separated from grinding slurries, with a device in which the grinding slurry is inductively heated, for carrying out the method according to one of Claims 4 to 13, **characterized in that** the separating station has a carrier bowl (3), which is arranged on a lifting device (2), receives the divided portion in the form of a flat layer of grinding slurry (10) and is provided with openings (6), through which the heated grinding oil flows off, and **in that** an inductor plate (9) is arranged above the carrier bowl (3), the carrier bowl (3) assuming either a lowered loading and unloading position or a heating position, in which it is moved up to the inductor plate (9), and the change between the two positions being performed by the lifting device (2).

15. Separating station, in which grinding oil is separated from grinding slurries, with a device in which the grinding slurry is inductively heated, for carrying out the method according to one of Claims 7 to 13, **characterized in that** the separating station has the following features:
a) an endless conveyor (33, 51), which is moved cyclically in a horizontal plane and has at least three carrier bowls (36, 53) for receiving divided layers of grinding slurry (45, 54);
b) treatment units, mounted over the endless conveyor (33, 51), for filling, inductively heating and removing the layers of grinding slurry (45, 54) located in the carrier bowls (36, 53);
c) in the treatment unit for heating, a lifting device (38, 59) with an inductor plate (37, 60) located on it, which is moved between an ineffective raised position and a lowered position, brought into the effective range of the layer of grinding slurry (45, 54) respectively located thereunder, and
d) a collecting system with openings (6, 7) in the carrier bowls (36, 53) and the endless conveyors (33, 51), whereby the amounts of grinding oil leaving the layers of grinding slurry (45, 54) are directed into collecting troughs (41, 57), which are located in the lower region of the separating station.

16. Separating station according to Claim 15, **characterized in that** the endless conveyor is formed as a belt conveyor with a linear conveying direction (35) or as a circular conveyor (51) in the manner of a carousel.

17. Separating station according to Claim 15 or 16, **characterized in that** a blasting head (50) is provided as a further treatment unit, arranged downstream of the inductor plate (37) in the conveying direction (35) of the endless conveyor (33) and connected to the lifting device (38), whereby a stream of blasting air is directed onto a carrier bowl (36) after it has left the inductor plate (37), driving out further components of grinding oil from the layer of grinding slurry (45), or a preheating location is provided as a further treatment unit, located upstream of the inductor plate (37, 60) in the conveying direction (35, 52) of the endless conveyor (33, 51) and serving for preheating the divided layer of grinding slurry (45, 54).

18. Separating station according to one of Claims 14 to 17, **characterized in that** the carrier bowl (3, 36, 53) comprises a flat plate (4) with the openings (6) and a rising-up rim (5), in particular the carrier bowl (3) has a permeable intermediate base (8) of a screen material or a perforated plate, which is located at a distance above the flat plate (4), the openings (6) of which are large in relation to those of the intermediate base (8).

19. Separating station according to Claim 18, **characterized in that** the rim (5) is surrounded by an abutting frame (11), which is supported in an elastically yielding manner on the carrier bowl (3) and, in the heating position of the carrier bowl (3), is pressed against the inductor plate (9) from below, whereby the flat layer of grinding slurry (10) located on the carrier bowl (3) is held together.

20. Separating station according to Claim 18 or 19, **characterized in that**, in the heating position of the carrier bowl (3), an additional steel plate (13) is placed between the flat layer of grinding slurry (10) and the underside of the inductor plate (9) and rests directly on the layer of grinding slurry (10) or on the abutting frame (11).

21. Separating station according to one of Claims 18 to 20, **characterized in that** a steel plate (24), which is perforated or formed as a screen, is placed within the divided layer of grinding slurry (45, 54) that is located in the carrier bowl (36, 53), in particular **in that** the flat plate (4) forming the base of the carrier bowl (36, 53) consists of a ferromagnetic material.

22. Separating station, in which grinding oil is separated from grinding slurries, with a device in which the grinding slurry is inductively heated, for carrying out the method according to Claim 11, **characterized in that** a belt conveyor (73), which is moved continuously in a horizontal plane, is provided in the manner of a conveyor belt, the path of movement of which between a loading station and an unloading station runs underneath a constantly activated inductor plate (77), whereby an endless layer of grinding slurry (85) located on the belt conveyor (73) is heated region by region and components of the grinding oil located in the endless layer of grinding slurry (85) are made to drip off.

23. Separating station according to one of Claims 14 to 22, **characterized in that** the device for inductively heating the grinding slurry can be controlled such that, after heated grinding oil has flowed off, remaining amounts of the grinding oil can be burned, in particular **in that** an energy source connected downstream of the device for inductively heating the grinding oil is additionally provided for burning residual amounts of the grinding oil.

24. Processing plant in which grinding oil is separated from grinding slurries, in that a mechanically acting separating device is combined with an inductive heating means, **characterized in that** it comprises three treatment stations connected to one another, to be specific
- a first treatment station, in which the mechanically acting separating device acts on a continuously flowing stream of the grinding slurry, and
- a second treatment station, which is formed as a tank heated by heat exchangers, takes over, temporarily stores and pre-heats the stream of grinding slurry flowing off from the first treatment station, and
- a third treatment station, which is formed as a separating station according to one of Claims 14 to 23.

25. Processing plant according to Claim 24, **characterized in that** a magnetic roller, a centrifuge or a sedimentation tank is provided as the mechanically acting separating device of the first treatment station, in particular **in that** the heat exchangers of the heated tank for heating up the heating medium are connected to a plant for re-cooling cooling lubricants of the grinding machines.

26. Processing plant according to Claim 24 or 25, **characterized in that** a fourth treatment station is provided, formed as a separating station according to Claim 23.

## Revendications

1. Procédé pour séparer de l'huile de meulage de poussières de meulage, avec réchauffage des poussières de meulage par chauffage par induction, **caractérisé par** les étapes suivantes:
a) on étend les poussières de meulage sur un support en une couche plate (10, 45, 54) de faible hauteur;
b) on expose la surface libre (16) de la couche plate de poussières de meulage (10, 45, 54) à la zone d'action d'une plaque d'inducteur (9, 37, 60) agissant par le haut, en déplaçant la plaque d'inducteur (9, 37, 60) et le support l'un par rapport à l'autre en faisant varier l'écartement;
c) on soutire vers le bas, à travers des ouvertures dans le support, l'huile de meulage dont la viscosité est réduite par le réchauffage par induction;
d) on enlève du support la couche de poussières de meulage (10, 45, 54) à l'extérieur de la zone d'action de la plaque d'inducteur (9, 37, 60).

2. Procédé selon la revendication 1, **caractérisé en ce que** l'on dépose la couche plate de poussières de meulage (10, 45, 54) sur le support avec une épaisseur de 2 à 30 mm, en particulier on la dépose sur le support hors de la zone d'action de la plaque d'inducteur (9, 37, 60).

3. Procédé selon la revendication 1 ou 2, **caractérisé en ce que** l'on pose sur la surface libre (16) de la couche plate de poussières de meulage (10, 45, 54) une plaque d'acier (13), qui se trouve dans la zone d'action de la plaque d'inducteur (9, 37, 60) entre celle-ci et la surface libre (16) de la couche de poussières de meulage (10, 45, 54), ou **en ce que** l'on introduit une plaque d'acier (24) perforée ou en forme de tamis dans la couche plate de poussières de meulage (10, 45, 54), à distance au-dessus du support.

4. Procédé selon l'une quelconque des revendications 1 à 3, **caractérisé en ce que** l'on étend la couche de poussières de meulage (10, 45, 54) sous la forme d'une quantité partielle divisée sur un plateau de support (3, 36, 53), qui est orienté parallèlement à la plaque d'inducteur (9, 37, 60), **en ce que** l'on déplace la plaque d'inducteur (9, 37, 60) et le plateau de support (3, 36, 53) l'un par rapport à l'autre et ceux-ci atteignent l'une après l'autre une des positions suivantes:
a) une position de chargement, dans laquelle le plateau de support (3, 36, 53) et la plaque d'inducteur (9, 37, 60) sont éloignés l'un de l'autre et on étend la quantité divisée des poussières de meulage (10, 45, 54) sur le plateau de support (3, 36, 53);
b) une position de travail, dans laquelle le plateau de support (3, 36, 53) se trouve près de la plaque d'inducteur (9, 37, 60) et la couche divisée de poussières de meulage (10, 45, 54) se trouve dans la zone d'action de la plaque d'inducteur (9, 37, 60);
c) une position de déchargement, dans laquelle le plateau de support (3, 36, 53) et la plaque d'inducteur (9, 37, 60) sont pareillement éloignés l'un de l'autre et on transfère la couche divisée de poussières de meulage (10, 45, 54), dont la teneur en huile de meulage est à présent réduite, à un dispositif de collecte ou de transport.

5. Procédé selon la revendication 4, **caractérisé en ce que** l'on transfère le plateau de support (3) dans la zone d'action d'une plaque d'inducteur installée de façon stationnaire (9), en l'approchant par le bas de la plaque d'inducteur (9) placée horizontalement et installée de façon stationnaire, tandis que le chargement et le déchargement du plateau de support (3) sont effectués dans sa position abaissée.

6. Procédé selon la revendication 5, **caractérisé en ce que** l'on déplace le plateau de support (3), dans sa position abaissée, horizontalement à sa position de chargement ou de déchargement.

7. Procédé selon la revendication 4, **caractérisé en ce que** l'on déplace en cadence un transporteur sans fin (33, 51), sur lequel au moins trois plateaux de support (36, 53) sont formés, en direction horizontale en dessous de la plaque d'inducteur (37, 60), et **en ce que** l'on exécute en l'occurrence sur des quantités partielles divisées des poussières de meulage (45, 54), successivement les opérations de a) épandage, b) chauffage par induction et c) déchargement, en particulier **en ce que** l'on déplace en l'occurrence aussi la plaque d'inducteur (37, 60) en hauteur.

8. Procédé selon la revendication 7, **caractérisé en ce que** l'on effectue l'opération de transport sans fin selon le principe d'un transporteur à courroie avec une direction de transport rectiligne (35) ou selon le principe d'un transporteur circulaire (51).

9. Procédé selon la revendication 7 ou 8, **caractérisé en ce que** l'on traite, entre les opérations de chauffage par induction et de déchargement, la couche divisée de poussières de meulage (45, 54) sur le plateau de support (36, 53) avec un courant d'air, qui refoule ou extrait un supplément d'huile de meulage hors de la couche divisée de poussières de meulage (45, 54).

10. Procédé selon l'une quelconque des revendications 4 à 9, **caractérisé en ce que** l'on n'active la plaque d'inducteur (9, 37, 60) de façon électromagnétique que lorsque la couche divisée respective de poussières de meulage (10, 45, 54) a atteint entièrement la zone d'action de la plaque d'inducteur (9, 37, 60).

11. Procédé selon l'une quelconque des revendications 1 à 3, **caractérisé en ce qu'**on le met en oeuvre avec un transporteur à courroie en mouvement continu (73), dont le brin supérieur (73a) sert de support pour une couche de poussières de meulage (85) déposée en continu et transporte celle-ci sous une plaque d'inducteur (77) activée en permanence, dans lequel la vitesse de défilement du brin supérieur (73a) commande l'apport de chaleur dans la couche de poussières de meulage (85).

12. Procédé selon l'une quelconque des revendications 1 à 11, **caractérisé en ce qu'**on le met en oeuvre en liaison avec un premier prétraitement pour la séparation mécanique d'huile de meulage hors des poussières de meulage et avec un deuxième prétraitement, qui succède au premier, pour le préchauffage de l'huile de meulage, en particulier **en ce que** l'on effectue la séparation mécanique au moyen d'aimants, par centrifugation ou par sédimentation et **en ce que** la chaleur pour le préchauffage des poussières de meulage est récupérée à partir du refroidissement du lubrifiant de refroidissement nécessaire pour le meulage et/ou à partir de la chaleur perdue par des ensembles périphériques de rectifieuses.

13. Procédé selon l'une quelconque des revendications 1 à 12, **caractérisé en ce que** l'on réchauffe les poussières de meulage jusqu'à un point tel que des quantités résiduelles de l'huile de meulage soient brûlées.

14. Station de séparation, dans laquelle on sépare de l'huile de meulage de poussières de meulage, comportant un dispositif dans lequel les poussières de meulage sont réchauffées par induction, pour la mise en oeuvre du procédé selon l'une quelconque des revendications 4 à 13, **caractérisée en ce que** la station de séparation comprend un plateau de support (3) disposé sur un dispositif de levage (2), plateau qui reçoit la quantité partielle divisée sous la forme d'une couche plate de poussières de meulage (10) et est doté d'ouvertures (6), à travers lesquelles l'huile de meulage réchauffée s'évacue, et **en ce qu'**une plaque d'inducteur (9) est disposée au-dessus du plateau de support (3), dans laquelle le plateau de support (3) occupe soit une position abaissée de chargement et de déchargement soit une position de chauffage rapprochée de la plaque d'inducteur (9) et le changement entre les deux positions est opéré au moyen du dispositif de levage (2).

15. Station de séparation, dans laquelle on sépare de l'huile de meulage de poussières de meulage, comportant un dispositif dans lequel les poussières de meulage sont réchauffées par induction, pour la mise en oeuvre du procédé selon l'une quelconque des revendications 7 à 13, **caractérisée en ce que** la station de séparation présente les caractéristiques suivantes:
a) un transporteur sans fin (33, 51) déplacé en cadence dans un plan horizontal, avec au moins trois plateaux de support (36, 53) destinés à recevoir des couches divisées de poussières de meulage (45, 54);
b) des unités de traitement installées au-dessus du transporteur sans fin (33, 51), pour le remplissage, le chauffage par induction et l'enlèvement des couches de poussières de meulage (45, 54) se trouvant dans les plateaux de support (36, 53);
c) dans l'unité de traitement destinée au chauffage, un dispositif de levage (38, 59) avec une plaque d'inducteur (37, 60) se trouvant sur celui-ci, qui est déplacée entre une position relevée sans effet et une position abaissée amenée dans la zone d'action de la couche de poussières de meulage (45, 54) se trouvant respectivement sous celle-ci; et
d) un système de collecte avec des ouvertures (6, 7) dans les plateaux de support (36, 53) et les transporteurs sans fin (33, 51), par lesquelles les quantités d'huile de meulage sortant des couches de poussières de meulage (45, 54) sont conduites dans des cuves de collecte (41, 57), qui se trouvent dans la région inférieure de la station de séparation.

16. Station de séparation selon la revendication 15, **caractérisée en ce que** le transporteur sans fin est constitué par un transporteur à courroie avec une direction de transport rectiligne (35) ou par un transporteur circulaire (51) à la manière d'un carrousel.

17. Station de séparation selon la revendication 15 ou 16, **caractérisée en ce qu'**il est prévu comme autre unité de traitement une tête de soufflage (50), qui est disposée après la plaque d'inducteur (37) dans la direction de transport (35) du transporteur sans fin (33) et qui est reliée au dispositif de levage (38), ce qui permet de diriger vers un plateau de support (36), après qu'il ait quitté la plaque d'inducteur (37), un courant d'air soufflé qui refoule d'autres parties d'huile de meulage hors de la couche de poussières de meulage (45), ou un poste de préchauffage, qui se trouve avant la plaque d'inducteur (37, 60) dans la direction de transport (35, 52) du transporteur sans fin (33, 51) et qui sert pour le préchauffage de la couche divisée de poussières de meulage (45, 54).

18. Station de séparation selon l'une quelconque des revendications 14 à 17, **caractérisée en ce que** le plateau de support (3, 36, 53) se compose d'une plaque plate (4) avec les ouvertures (6) et un bord en saillie vers le haut (5), en particulier le plateau de support (3) présente un fond intermédiaire perméable (8) en un matériau de tamis ou une plaque perforée, qui se trouve à distance de la plaque plate (4), dont les ouvertures (6) sont grandes par rapport à celles du fond intermédiaire (8).

19. Station de séparation selon la revendication 18, **caractérisée en ce que** le bord (5) est entouré d'un cadre d'appui (11), qui s'appuie de façon déformable élastiquement sur le plateau de support (3) et qui est poussé par le bas contre la plaque d'inducteur (9) dans la position de chauffage du plateau de support (3), ce qui permet de retenir la couche plate de poussières de meulage (10) se trouvant sur le plateau de support (3).

20. Station de séparation selon la revendication 18 ou 19, **caractérisée en ce que**, dans la position de chauffage du plateau de support (3), une plaque d'acier supplémentaire (13) est introduite entre la couche plate de poussières de meulage (10) et le côté inférieur de la plaque d'inducteur (9), et elle repose directement sur la couche de poussières de meulage (10) ou sur le cadre d'appui (11).

21. Station de séparation selon l'une quelconque des revendications 18 à 20, **caractérisée en ce qu'**une plaque d'acier (24) perforée ou sous forme de tamis est introduite au milieu de la couche divisée de poussières de meulage (45, 54), qui se trouve dans le plateau de support (36, 53), en particulier **en ce que** la plaque plate (4) formant le fond du plateau de support (36, 53) se compose d'un matériau ferromagnétique.

22. Station de séparation, dans laquelle on sépare de l'huile de meulage de poussières de meulage, comportant un dispositif dans lequel les poussières de meulage sont réchauffées par induction, pour la mise en oeuvre du procédé selon la revendication 11, **caractérisée en ce qu'**il est prévu un transporteur à courroie (73) à la manière d'une bande transporteuse, déplacé en continu dans un plan horizontal, dont la trajectoire s'étend entre une station de chargement et une station de déchargement en dessous d'une plaque d'inducteur (77) activée en permanence, ce qui permet de réchauffer localement une couche sans fin de poussières de meulage (85) se trouvant sur le transporteur à courroie (73) et de faire s'égoutter des parties de l'huile de meulage se trouvant dans la couche sans fin de poussières de meulage (85).

23. Station de séparation selon l'une quelconque des revendications 14 à 22, **caractérisée en ce que** le dispositif destiné au réchauffage par induction des poussières de meulage peut être régulé de telle manière que, après l'évacuation de l'huile de meulage réchauffée, des quantités résiduelles de l'huile de meulage puissent être brûlées, en particulier **en ce qu'**il est prévu en plus une source d'énergie disposée en aval du dispositif pour le réchauffage par induction de l'huile de meulage, pour la combustion de quantités résiduelles de l'huile de meulage.

24. Installation technologique, dans laquelle on sépare de l'huile de meulage de poussières de meulage, dans laquelle un dispositif de séparation opérant mécaniquement est combiné avec un chauffage par induction, **caractérisée en ce qu'**elle comprend trois stations de traitement reliées les unes aux autres, à savoir
- une première station de traitement, dans laquelle le dispositif de séparation opérant mécaniquement agit sur un courant en écoulement continu de poussières de meulage, et
- une deuxième station de traitement, qui est constituée par un récipient chauffé par des échangeurs de chaleur, qui reçoit, accumule et préchauffe le courant des poussières de meulage s'écoulant de la première station de traitement, ainsi que
- une troisième station de traitement, qui est constituée d'une station de séparation selon l'une quelconque des revendications 14 à 23.

25. Installation technologique selon la revendication 24, **caractérisée en ce qu'**il est prévu, comme dispositif de séparation opérant mécaniquement de la première station de traitement, un rouleau magnétique, une centrifugeuse ou un bassin de sédimentation, en particulier **en ce que** les échangeurs de chaleur du récipient chauffé destiné au chauffage du fluide de chauffage sont raccordés à une installation pour le refroidissement de lubrifiants de refroidissement des rectifieuses.

26. Installation technologique selon la revendication 24 ou 25, **caractérisée en ce qu'**il est prévu une quatrième station de traitement, qui est constituée par une station de séparation selon la revendication 23.
